# EUROPEAN PATENT SPECIFICATION

(11) **EP 3 772 709 B1**
(45) Date of publication and mention of the grant of the patent: **07.10.2026**
(21) Application number: 19190237.8
(22) Date of filing: 06.08.2019
(51) Int. Cl.: G06N 3/084, G06N 3/044, G06N 3/045, G06N 3/0442, G06N 3/0464, G06N 3/09

(54) **DEEP NEURAL NETWORK WITH EQUILIBRIUM SOLVER**
TIEFES NEURONALES NETZ MIT GLEICHGEWICHTSAUFLÖSER
RÉSEAU NEURONAL PROFOND AVEC RÉSOLVEUR D'ÉQUILIBRE

(43) Date of publication of application: 10.02.2021
(73) Proprietor: Robert Bosch GmbH, 70442 Stuttgart (DE); Carnegie Mellon University, Pittsburgh, PA 15213 (US); Intel Corporation, Santa Clara, CA 95054 (US)
(72) Inventor: Bai, Shaojie, Pittsburgh, PA 15213 (US); Kolter, Jeremy Zieg, Pittsburgh, PA 15217 (US); Schober, Michael, 72074 Tübingen (DE); Koltun, Vladlen, Santa Clara, CA 95054 (US)
(74) Representative: DeltaPatents B.V.

(56) References cited:
- MICHAEEL KAZI ET AL: "Implicitly-Defined Neural Networks for Sequence Labeling", PROCEEDINGS OF THE 55TH ANNUAL MEETING OF THE ASSOCIATION FOR COMPUTATIONAL LINGUISTICS (VOLUME 2: SHORT PAPERS), 2017, Stroudsburg, PA, USA, pages 172 - 177, XP055666230, DOI: 10.18653/v1/P17-2027
- SHAOJIE BAI ET AL: "Trellis Networks for Sequence Modeling", ARXIV.ORG, CORNELL UNIVERSITY LIBRARY, 201 OLIN LIBRARY CORNELL UNIVERSITY ITHACA, NY 14853, 15 October 2018 (2018-10-15), XP081123484
- MOSTAFA DEHGHANI ET AL: "Universal Transformers", ARXIV.ORG, CORNELL UNIVERSITY LIBRARY, 201 OLIN LIBRARY CORNELL UNIVERSITY ITHACA, NY 14853, 10 July 2018 (2018-07-10), XP081122339

## Description

### FIELD OF THE INVENTION

The invention relates to a system and computer-implemented method for training a neural network. The invention further relates to a trained neural network. The invention further relates to a system and computer-implemented method for using a trained neural network for inference, for example to control or monitor a physical system based on a state of the physical system which is inferred from sensor data. The invention further relates to a computer-readable medium comprising transitory or non-transitory data representing instructions for a processor system to perform either computer-implemented method.

### BACKGROUND OF THE INVENTION

Machine learned ('trained') models are widely used in many real-life applications, such as autonomous driving, robotics, manufacturing, building control, etc. Machine learnable models are trained to infer a state of a physical system, such as an autonomous vehicle or a robot, etc., or the system's environment, e.g., the road on which the vehicle is travelling, the robot's workspace, etc., based on sensor data which is acquired by one or more sensors. Having inferred the state, the physical system is controlled using one or more actuators, or its operation may be monitored.

In many cases, neural networks with many layers ('deep neural networks') are the most successful models for a given task. However, the implementation of such deep neural networks typically requires a large amount of memory for parameters of the model, such as the weights per layer. In addition, the training itself of a deep neural network requires a large amount of memory, since in addition to the weights per layer, also a large amount of temporary data has to be stored for the forward passes ('forward propagation') and backward passes ('backward propagation') during the training. For example, the layer output of each individual layer ('hidden state') during forward propagation may need to be stored as temporary data as it may be used in the backward propagation. This way, the training of a deep neural network may require many gigabytes of memory, with the memory requirements being expected to further increase as the complexity of models increases. This may represent a serious bottleneck for training machine learnable models in the future, and may result in the training of machine learnable models on lower-spec (e.g., end-user) devices becoming infeasible due to the memory requirements. Such training on lower-spec devices may nevertheless be desired, for example for continual learning after deployment.

While it is known to share weights across some or all layers of a neural network, see, e.g., [1], thereby reducing the amount of data to be stored for the neural network's weights, the temporary data for the forward and backward passes typically still needs to be stored separately for each layer even if several layers have shared weights.

Another disadvantage, besides the large amount of data to be stored in memory, is that the propagating through all the layers of a deep neural network during training, but in some cases also during subsequent use, may be computationally complex and thereby time consuming, resulting in lengthy training sessions and/or a high latency of the model during use. The latter may be particularly undesirable in real-time use.

MICHAEEL KAZI ET AL describe in "Implicitly-Defined Neural Networks for Sequence Labeling", PROCEEDINGS OF THE 55TH ANNUAL MEETING OF THE ASSOCIATION FOR COMPUTATIONAL LINGUISTICS (VOLUME 2: SHORT PAPERS), 2017, pages 172-177, Stroudsburg, PA, USA DOI: 10.18653/v1/P17-2027 an implicit neural network architecture and show that it can be computed in a reasonably efficient manner.

### References

[1] Shaojie Bai, J. Zico Kolter, and Vladlen Koltun. Trellis networks for sequence modeling. In International Conference on Learning Representations (ICLR), 2019, https://arxiv.org/abs/1810.06682

### SUMMARY OF THE INVENTION

The invention is defined by the appended independent claims. Embodiments of the invention are defined by the appended dependent claims.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a system for training a neural network in which a substitute is provided for a stack of layers which defines an iterative function, and wherein the system is configured to determine an equilibrium point at which the iterative function converges and to provide the equilibrium point as a substitute for the output of the stack of layers;
Fig. 2 shows a computer-implemented method for training a neural network;
Fig. 3 illustrates a solving for an equilibrium point in 2D;
Fig. 4A shows a deep neural network with a stack of layers having mutually shared weights and together defining an iterative function;
Fig. 4B shows a deep neural network in which the output of a stack of layers is substituted by the output of an equilibrium solver applied to the iterative function;
Fig. 5 shows a graph setting out the number of Broyden iterations of a deep-equilibrium model (DEQ)-based transformer against the training epoch;
Fig. 6 shows a graph setting out the number of function evaluations against a difference norm for the DEQ-transformer and a weight-tied transformer as reference;
Fig. 7 shows system for applying the trained neural network to input data;
Fig. 8 shows the system as part of an (semi-)autonomous vehicle;
Fig. 9 shows a computer-implemented method for using a trained neural network for inference, for example to control a physical system; and
Fig. 10 shows a computer-readable medium comprising data.

It should be noted that the figures are purely diagrammatic and not drawn to scale. In the figures, elements which correspond to elements already described may have the same reference numerals.

### List of reference numbers

The following list of reference numbers is provided for facilitating the interpretation of the drawings and shall not be construed as limiting the claims.
- 20: sensor
- 22: camera
- 40: actuator
- 42: electric motor
- 60: environment
- 80: (semi)autonomous vehicle

- 100: system for training neural network
- 160: processor subsystem
- 180: data storage interface
- 190: data storage
- 192: training data
- 194: data representation of untrained neural network
- 196: data representation of trained neural network

- 200: method for training neural network
- 210: providing data representation of neural network
- 220: accessing training data
- 230: iteratively training neural network using training data
- 240: determining equilibrium point using root-finding algorithm
- 250: providing equilibrium point as substitute for output of stack of layers
- 260: outputting trained neural network

- 300: illustration of solving for equilibrium point in 2D
- 310: deep neural network with equilibrium solver
- 320: weight-tied deep neural network
- 330: numerical root-finding step
- 340: iterative function minus its input
- 350: equilibrium point

- 400: deep neural network
- 410: deep neural network with equilibrium solver
- 420: neural network depth
- 430: forward propagation direction
- 440: backward propagation direction
- 450: history (or zero) padding
- 460: input injection, positional embedding
- 470: memory storage needed at training time for backward pass
- 480: equilibrium solver

- 500: illustration of number of Broyden iterations of DEQ-transformer
- 510: training epochs
- 520: number of Broyden iterations per time step
- 530: forward propagation
- 540: backward propagation

- 600: illustration of finding of equilibrium of DEQ-transfomer
- 610: number of function evaluations
- 620: difference norm
- 630: weight-tied transformer (epoch 1)
- 640: weight-tied transformer (epoch 12)
- 650: DEQ-transformer (epoch 1)
- 660: DEQ-transformer (epoch 12)
- 700: system for control or monitoring using learned dynamics model
- 720: sensor data interface
- 722: sensor data
- 740: actuator interface
- 742: control data
- 760: processor subsystem
- 780: data storage interface
- 790: data storage

- 800: method for using trained neural network
- 810: accessing trained neural network
- 820: accessing input data
- 830: applying trained neural network to input data
- 840: determining equilibrium point
- 850: providing equilibrium point as substitute for output of stack of layers

- 900: computer-readable medium
- 910: non-transitory data

### DETAILED DESCRIPTION OF EMBODIMENTS

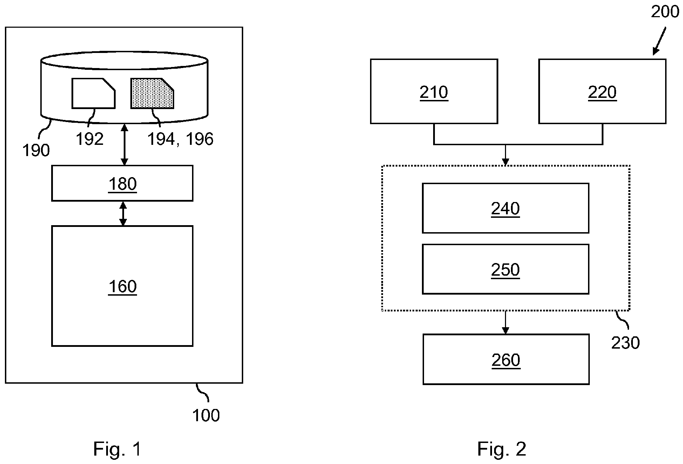

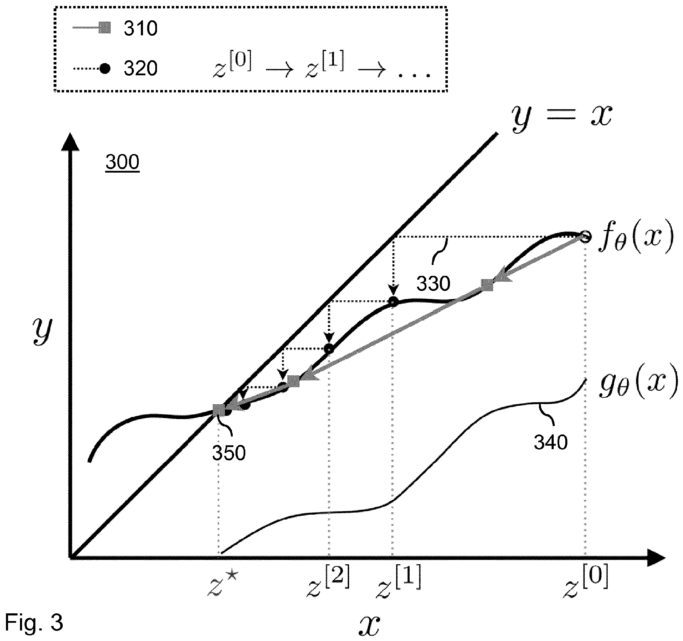

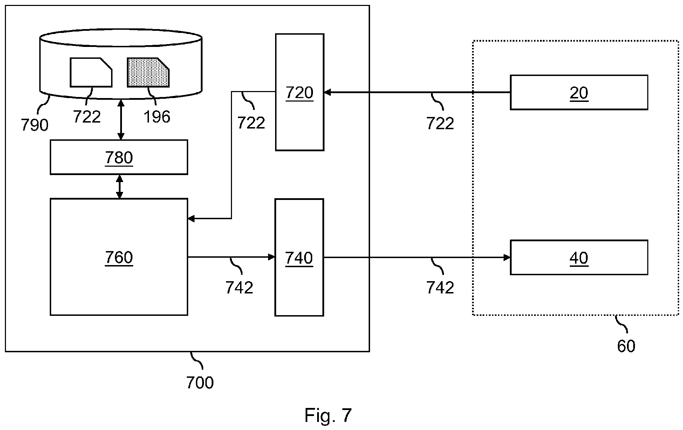

The following describes with reference to Figs. 1 and 2 the training of a neural network which uses a substitute for a stack of layers of the neural network having mutually shared weights, then describes with reference to Figs. 3-6 the neural network and its training in more detail, and with reference to Figs. 7-9 the use of the trained neural network for the control or monitoring of a physical system, such as an (semi-)autonomous vehicle.

**Fig. 1** shows a system 100 for training a neural network. The system 100 may comprise an input interface for accessing training data 192 for the neural network. For example, as illustrated in Fig. 1, the input interface may be constituted by a data storage interface 180 which may access the training data 192 from a data storage 190. For example, the data storage interface 180 may be a memory interface or a persistent storage interface, e.g., a hard disk or an SSD interface, but also a personal, local or wide area network interface such as a Bluetooth, Zigbee or Wi-Fi interface or an ethernet or fiberoptic interface. The data storage 190 may be an internal data storage of the system 100, such as a hard drive or SSD, but also an external data storage, e.g., a network-accessible data storage.

In some embodiments, the data storage 190 may further comprise a data representation 194 of an untrained version of the neural network which may be accessed by the system 100 from the data storage 190. It will be appreciated, however, that the training data 192 and the data representation 194 of the untrained neural network may also each be accessed from a different data storage, e.g., via a different subsystem of the data storage interface 180. Each subsystem may be of a type as is described above for the data storage interface 180. In other embodiments, the data representation 194 of the untrained neural network may be internally generated by the system 100 on the basis of design parameters for the neural network, and therefore may not explicitly be stored on the data storage 190.

The system 100 may further comprise a processor subsystem 160 which may be configured to, during operation of the system 100, provide an iterative function as a substitute for a stack of layers of the neural network to be trained. Here, respective layers of the stack of layers being substituted may have mutually shared weights and may receive as input an output of a previous layer, or for a first layer of the stack of layers, an initial activation, and a part of the input of the stack of layers. The processor subsystem 160 may be further configured to iteratively train the neural network using the training data 192. Here, an iteration of the training by the processor subsystem 160 may comprise a forward propagation part and a backward propagation part. The processor subsystem 160 may be configured to perform the forward propagation part by, amongst other operations defining the forward propagation part which may be performed, determining an equilibrium point of the iterative function at which the iterative function converges to a fixed point, wherein determining the equilibrium point comprises using a numerical root-finding algorithm to find a root solution for the iterative function minus its input, and by providing the equilibrium point as a substitute for an output of the stack of layers in the neural network. It is noted that the neural network and its training will be further described with reference to Figs. 3-6.

The system 100 may further comprise an output interface for outputting a data representation 196 of the trained neural network, this data also being referred to as trained model data 196. For example, as also illustrated in Fig. 1, the output interface may be constituted by the data storage interface 180, with said interface being in these embodiments an input/output ('IO') interface, via which the trained model data 196 may be stored in the data storage 190. For example, the data representation 194 defining the 'untrained' neural network may during or after the training be replaced, at least in part, by the data representation 196 of the trained neural network, in that the parameters of the neural network, such as weights, hyperparameters and other types of parameters of neural networks, may be adapted to reflect the training on the training data 192. This is also illustrated in Fig. 1 by the reference numerals 194, 196 referring to the same data record on the data storage 190. In other embodiments, the data representation 196 may be stored separately from the data representation 194 defining the 'untrained' neural network. In some embodiments, the output interface may be separate from the data storage interface 180, but may in general be of a type as described above for the data storage interface 180.

**Fig. 2** shows a computer-implemented method 200 for training a neural network. The method 200 may correspond to an operation of the system 100 of Fig. 1, but does not need to, in that it may also correspond to an operation of another type of system, apparatus or device or in that it may correspond to a computer program.

The method 200 is shown to comprise, in a step titled "PROVIDING DATA REPRESENTATION OF NEURAL NETWORK", providing 210 a neural network, wherein the providing of the neural network comprises providing an iterative function as a substitute for a stack of layers of the neural network, wherein respective layers of the stack of layers being substituted have mutually shared weights and receive as input an output of a previous layer, or for a first layer of the stack of layers, an initial activation, and a part of the input of the stack of layers. The method 200 is further shown to comprise, in a step titled "ACCESSING TRAINING DATA", accessing 220 training data for the neural network. The method 200 is further shown to comprise, in a step titled "ITERATIVELY TRAINING NEURAL NETWORK USING TRAINING DATA", iteratively 230 training the neural network using the training data, which training 230 may comprise a forward propagation part and a backward propagation part. Performing the forward propagation part by the method 200 may comprise, in a step titled "DETERMINING EQUILIBRIUM POINT USING ROOT-FINDING ALGORITHM", determining 240 an equilibrium point of the iterative function at which the iterative function converges to a fixed point, wherein determining the equilibrium point comprises using a numerical root-finding algorithm to find a root solution for the iterative function minus its input, and in a step titled "PROVIDING EQUILIBRIUM POINT AS SUBSTITUTE FOR OUTPUT OF STACK OF LAYERS", providing 250 the equilibrium point as a substitute for an output of the stack of layers in the neural network. The method 200 may further comprise, after the training and in a step titled "OUTPUTTING TRAINED NEURAL NETWORK", outputting 260 a trained neural network.

The following examples describe the neural network, including the training thereof in which a stack of layers is substituted by an iterative function and in which a root-finding algorithm is used to determine an equilibrium point at which the iterative function converges to a fixed point, in more detail. However, the actual implementation of the neural network and its training may be carried out in various other ways, e.g., on the basis of analogous mathematical concepts. For example, while the following describes both the forward passes and the backward passes being based on a numerical root-finding algorithm, in some embodiments, only the forward pass may be as described below while the backward pass may be performed in another manner, e.g., by backpropagation of algebra terms which are used in the root-finding algorithm so as to obtain a backpropagated algebraic expression. In other examples, Boyden's method may be replaced by a use of the so-called 'Anderson acceleration' technique to accelerate the convergence of a fixed point iteration and thereby to determine the equilibrium point of the iterative function. Various other embodiments are within reach of the skilled person based on this specification.

The following considers a deep neural network with hidden layers *z* and activations *f* such that *z*^{[*i*+1]} = *f*(*z*^{[*i*]}, *θᵢ, c*(*x*)) for *i* = 0, 1, 2, ... , *L* with weights *θᵢ* and previous layer inputs *c*(*x*) may both be tied across layers, i.e., *θᵢ* = *θ*∀*i*. Some of the activations *f* may exhibit an attractor property, in that there may exist a fixed point *z** such that *z** = *f*(*z***, θ, c*(*x*)) and ${lim}_{L \to ∞} {{\left(f∘…∘f\right)}_{︸}}_{L - times} \left({z}^{\left[0\right]},θ,c\left(x\right)\right) = z *$*.* In other words, the repeated application of *f* for an initial activation *z*^{[0]} may converge to a fixed point *z**. The following describes replacing the iterated function application or the iterated function execution by the use of a numerical method, namely a numerical root-finding algorithm, to find the fixed point directly.

The forward pass, which may also be referred to as a forward propagation part of the training or simply as 'inference', may be briefly characterized as follows:

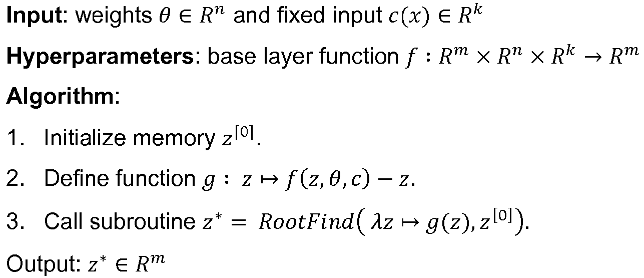

*RootFind* may be computed via any Newton's method variant, e.g, classic Newton-Raphson method, Broyden's method, Steffensen's method, etc.

The backward pass, which may also be referred to as a backward propagation part or simply as 'training', may be briefly characterized as follows:

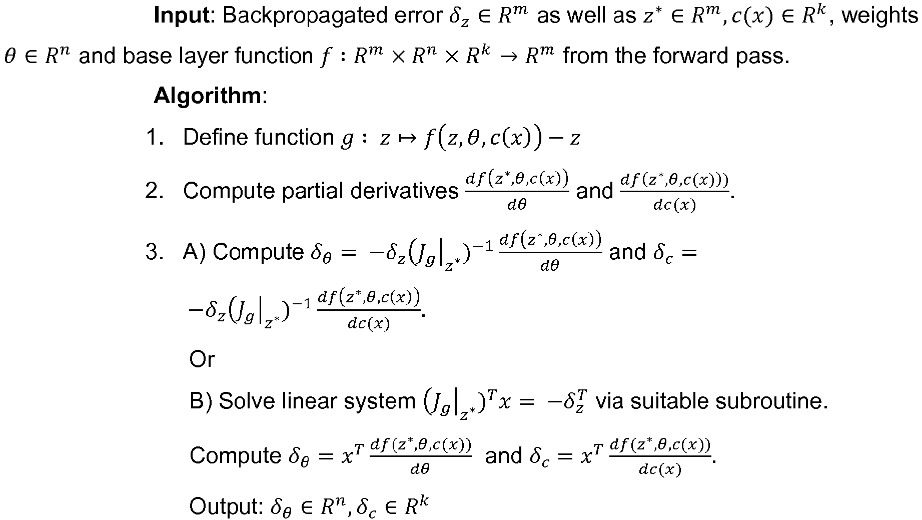

If (*J_{g}*|_{*z*^{*}})⁻¹ or an approximation thereof has been already computed in the forward pass in *RootFind,* (*J_{g}*|_{*z*^{*}})⁻¹ or its approximation may be stored during the forward pass and used in the backward pass. For solving the linear system, any suitable method may be used, for example an indirect method that exploits fast matrix-vector products. Broyden's method may be used in solving the linear system, as well as any other Newton's method variant. In general, all derivatives which are indicated above may be implemented via their analytic equations or computed, e.g., via automatic differentiation tools.

The following further describes the above measures within the context of the modeling of sequential data, i.e., **x**_{1:*T*}. It will be appreciated, however, that the applicability is not limited to sequential data, but may be applied to spatial or any other type of data **x** as well. It is further noted that the following replaces *c*(*x*), referring to the initial input of the stack of layers which is used as a constant input to each individual layer, by the equivalent **x**.

As an introductory comment, it is noted that most modern feedforward deep neural networks (in the following also simply referred to as 'networks' or 'nets' or 'models') are built on the core concept of *layers.* In the forward pass, each network may consist of a stack of some *L* transformations, where *L* is the depth of the network. To update these networks, the backward passes may rely on backpropagating through the same *L* layers via the chain rule, which typically necessitates that the intermediate values of these layers are stored as temporary data. The value for *L* is usually a hyperparameter and is selected by model designers (e.g., ResNet-101). Among the many applications of deep networks, sequence modelling has witnessed continuous advances in deep architectures. Specifically, while recurrent networks have long been the dominant model for sequences, deep feedforward architectures based on temporal convolutions and self-attention have (re-)emerged to claim superior performance on a variety of sequence prediction tasks.

In very general terms, a deep feedforward sequence model may be written as the following iteration: ${z}_{1 : T}^{\left[i+1\right]} = {f}_{θ}^{\left[i\right]} \left({z}_{1 : T}^{\left[i\right]}, {x}_{1 : T}\right) for i = 0 , 1 , 2 , … , L$ (1) where *i* is the layer index; ${z}_{1 : T}^{\left[i\right]}$ is the hidden sequence of length *T* at layer *i;* **x**_{1:*T*} is the input sequence and thereby the model explicitly models skip connections for reasons as explained later; and ${f}_{θ}^{\left[i\right]}$ is some nonlinear transformation which may typically enforce causality (e.g., future time points cannot influence past ones). The following is based on the use of the same transformation in each layer (known as *weight tying,* with ${f}_{θ}^{\left[i\right]} = {f}_{θ} , ∀ i$ ) which is known to still achieve results competitive with the state-of-the-art.

The following further introduces a method that directly computes the fixed point ${z}_{1 : T}^{⋆}$ of a nonlinear transformation, e.g., the solution to the nonlinear system ${z}_{1 : T}^{⋆} = {f}_{θ} \left({z}_{1 : T}^{⋆}, {x}_{1 : T}\right) .$ (2)

This solution corresponds to the eventual hidden layer values of an *infinite depth* network. But instead of finding this value, which may be an array or a vector of values and which here and elsewhere be referred to as 'equilibrium point', by iterating the model, the equilibrium point may be found directly via any black-box root-finding method. This approach may be referred to as a deep equilibrium model (DEQ) approach or simply 'DEQ'.

The following shows that DEQ may *directly* differentiate through the fixed point equations via implicit differentiation, which may not require storing *any* intermediate activation values. In other words, one may backpropagate through the infinite-depth network while using only *constant* memory, equivalent to a single layer's activations. After describing the generic DEQ approach, the instantiation of DEQ is described in two feedforward sequence models: *trellis networks* (weight-tied temporal convolutions) and memory-augmented *universal transformers* (weight-tied multi-head self-attention), both of which have obtained state-of-the-art performance on various sequence tasks. It is further shown how both the forward and the backward passes may be implemented via quasi-Newton methods.

One may broadly consider the class of *weight-tied* deep sequence models (with passthrough connections from the input to each layer), which consist of the update ${z}_{1 : T}^{\left[i+1\right]} = {f}_{θ} \left({z}_{1 : T}^{\left[i\right]}, {x}_{1 : T}\right) , i = 1 , … , L - 1 , {z}_{1 : T}^{\left[0\right]} = 0$ (3)

It is noted that this model encapsulates classes such as the trellis network and the universal transformer (which is typically not written with passthrough connections, but this is a trivial modification). Such weight-tying is generally considered to come with three major benefits: 1) it acts as a form of regularization that stabilizes training and supports generalization; 2) it significantly reduces the model size; and 3) the network can be unrolled to *any* depth, typically with improved feature abstractions as depth increases. However, in practice almost all such models (and deep networks in general) may be stacked, trained and evaluated *by unrolling a pre-determined, fixed number of layers.* One critical issue contributing to this is the limited memory on training hardware: as the models may need to store the intermediate hidden units for backpropagation, one may hardly train them beyond a certain depth, which depth may in turn depend on the computing resources available.

In principle, the network may have an infinite depth. This is attained in the limit of unrolling a weight-tied network for a higher and higher number of layers. However, such weight-tied models tend to converge to a *fixed point* as depth increases towards infinity, which has been determined via empirical evidence. In other words, as each layer refines the previous layer by combining temporal features across the sequence, increasing depth towards infinity brings "diminishing returns": each additional layer may have a smaller and smaller contribution until the network reaches an equilibrium state: ${lim}_{i \to ∞} {z}_{1 : T}^{\left[i\right]} = {lim}_{i \to ∞} {f}_{θ} \left({z}_{1 : T}^{\left[i\right]}; {x}_{1 : T}\right) ≡ {f}_{θ} \left({z}_{1 : T}^{⋆}; {x}_{1 : T}\right) = {z}_{1 : T}^{⋆}$ (4)

The DEQ approach may comprise, instead of iteratively stacking *f_{θ}*, directly solving for and differentiating through the equilibrium state.

The following discusses the forward pass of the training, and which also may be used for inference using the trained neural network. Unlike a conventional network where the output is just the *L*^{th} layer activations, the output of a DEQ is the equilibrium point itself. Therefore, the forward evaluation could be any procedure that solves for this equilibrium point. Conventional deep sequence networks, if they converge to an equilibrium, may be considered as one such method that uses the simplest *fixed point iterations:* ${z}_{1 : T}^{\left[i+1\right]} = {f}_{θ} \left({z}_{1 : T}^{\left[i\right]}; {x}_{1 : T}\right) for i = 0 , 1 , 2 , …$ (5)

One may alternatively also use other methods that provide faster convergence guarantees. For notational convenience, one may define *g_{θ}* and re-write Eq. ((4)) as: ${g}_{θ} \left({z}_{1 : T}^{⋆}; {x}_{1 : T}\right) = {f}_{θ} \left({z}_{1 : T}^{⋆}; {x}_{1 : T}\right) - {z}_{1 : T}^{⋆} \to 0$. The equilibrium state ${z}_{1 : T}^{⋆}$ may thus be the root of *g_{θ}*, which may be solved more easily with Newton's method or quasi-Newton methods (e.g., Broyden's method): ${z}_{1 : T}^{\left[i+1\right]} = {z}_{1 : T}^{\left[i\right]} - {αBg}_{θ} \left({z}_{1 : T}^{\left[i\right]}; {x}_{1 : T}\right) for i = 0 , 1 , 2 , …$ (6) where *B* is the Jacobian inverse (or its low-rank approximation) at ${z}_{1 : T}^{\left[i\right]}$ and *α* is the step size. However, in general, any 'black-box' type of numerical root-finding algorithm may be used to solve for the equilibrium point in the forward pass, given an initial estimate ${z}_{1 : T}^{\left[0\right]}$ (which may be set to 0): ${z}_{1 : T}^{⋆} = RootFind \left({g}_{θ}; {x}_{1 : T}\right)$

The following discusses the backward pass of the training. The use of a black-box RootFind may mean that one may no longer be able to rely on explicit backpropagation through the exact operations in the forward pass. However, one may adapt the numerical root-finding algorithm (say Newton's method) to obtain the equilibrium, and then store and allow backpropagating through all the Newton iterations, the following describes an alternative procedure which may be simpler to implement and which may require constant memory and assume no knowledge of the black-box RootFind.

Let ${z}_{1 : T}^{⋆} ∈ {ℝ}^{T \times d}$ be an equilibrium hidden sequence with length T and dimensionality d, and ${y}_{1 : T} ∈ {ℝ}^{T \times q}$ the ground-truth (target) sequence. Let $h : {ℝ}^{d} \to {ℝ}^{q}$ be any differentiable function and let $L : {ℝ}^{q} \times {ℝ}^{q} \to ℝ$ be a loss function (where h, 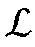 are applied in vectorized manner) that computes $l = L \left(h\left({z}_{1 : T}^{⋆}\right),{y}_{1 : T}\right) = L \left(h\left(RootFind\left({g}_{θ}; {x}_{1 : T}\right)\right),{y}_{1 : T}\right) .$ (7)

Then the loss gradient w.r.t. (·) (for instance, *θ* or **x**_{1:*T*}) is: $\frac{\partial l}{\partial \left(⋅\right)} = - \frac{\partial l}{\partial {z}_{1 : T}^{⋆}} \left({\left.{J}_{{g}_{θ}}^{- 1}\right|}_{{z}_{1 : T}^{⋆}}\right) \frac{d {f}_{θ} \left({z}_{1 : T}^{⋆}; {x}_{1 : T}\right)}{d \left(⋅\right)} = - \frac{\partial l}{\partial h} \frac{\partial h}{\partial {z}_{1 : T}^{⋆}} \left({\left.{J}_{{g}_{θ}}^{- 1}\right|}_{{z}_{1 : T}^{⋆}}\right) \frac{d {f}_{θ} \left({z}_{1 : T}^{⋆}; {x}_{1 : T}\right)}{d \left(⋅\right)}$ (8) where ${\left.{J}_{{g}_{θ}}^{- 1}\right|}_{x}$ means the inverse Jacobian of *g_{θ}* evaluated at **x**.

It has been found that the backward gradient through the "infinite" stacking may be represented as one step of matrix multiplication that involves the Jacobian at equilibrium. For instance, a stochastic gradient descent (SGD) update step on model parameters *θ* may be expressed as: ${θ}^{+} = θ - α ⋅ \frac{\partial l}{\partial θ} = θ + α \frac{\partial l}{\partial {z}_{1 : T}^{⋆}} \left({\left.{J}_{{g}_{θ}}^{- 1}\right|}_{{z}_{1 : T}^{⋆}}\right) \frac{d {f}_{θ} \left({z}_{1 : T}^{⋆}; {x}_{1 : T}\right)}{d θ}$ (9)

Note that this result may be independent of the root-finding algorithm or the internal structure of the transformation *f_{θ}*, and thus may not require any storage of the intermediate hidden states, which would otherwise be needed for deep backpropagation.

A challenge of enforcing the forward and backward passes described above may be the cost of computing the exact inverse Jacobian ${J}_{{g}_{θ}}^{- 1}$ at every intermediate Newton iteration. This may be addressed by using Broyden's method, a quasi-Newton approach that makes low-rank updates to approximate ${J}_{{g}_{θ}}^{- 1}$ via the Sherman-Morrison formula: ${\left.{J}_{{g}_{θ}}^{- 1}\right|}_{{z}_{1 : T}^{\left[i+1\right]}} \approx {B}_{{g}_{θ}}^{\left[i+1\right]} = {B}_{{g}_{θ}}^{\left[i\right]} + \frac{Δ {z}^{\left[i+1\right]} - {B}_{{g}_{θ}}^{\left[i\right]} Δ {g}_{θ}^{\left[i+1\right]}}{Δ {z}^{{\left[i+1\right]}^{⊤}} - {B}_{{g}_{θ}}^{\left[i\right]} Δ {g}_{θ}^{\left[i+1\right]}} Δ {z}^{{\left[i+1\right]}^{⊤}} {B}_{{g}_{θ}}^{\left[i\right]}$ (10) where $Δ {z}^{\left[i+1\right]} = {z}_{1 : T}^{\left[i+1\right]} - {z}_{1 : T}^{\left[i\right]}$ and $Δ {g}_{θ}^{\left[i+1\right]} = {g}_{θ} \left({z}_{1 : T}^{\left[i+1\right]}; {x}_{1 : T}\right) - {g}_{θ} \left({z}_{1 : T}^{\left[i\right]}; {x}_{1 : T}\right)$. Initially, one may set ${B}_{{g}_{θ}}^{\left[0\right]} = - I$, and the Broyden iterations may be stopped when either the norm of ${g}_{θ}^{\left[i\right]}$ falls below a tolerance *ε*, or when the maximum number of iterations is reached. This therefore helps avoiding the cubic cost induced by the inverse operation.

A similar idea may be used for the backward pass as well. Specifically, to compute $- \frac{\partial l}{\partial {z}_{1 : T}^{⋆}} \left({J}_{{g}_{θ}}^{- 1}\left|{}_{{z}_{1 : T}^{⋆}}\right.\right)$, one may alternatively solve for the *linear system:* $\left({J}_{{g}_{θ}}^{⊤}\left|{}_{{z}_{1 : T}^{⋆}}\right.\right) {x}^{⊤} + {\left(\frac{\partial l}{\partial {z}_{1 : T}^{⋆}}\right)}^{⊤} = 0$ (11) where the first term (i.e., a vector-Jacobian product) may be efficiently computed via autograd packages (e.g., in PyTorch) for any x, without explicitly writing out the Jacobian matrix. Such linear systems may generally be solved by any *indirect* methods that leverage fast matrix-vector products. One may also rely on Broyden's method (or in general, other indirect methods would also suffice) to solve for Eq. (11) and directly backpropagate through the equilibrium by Eq. (8) in the backward pass.

A benefit of DEQ may be its extreme memory efficiency. Since any numerical root-finding algorithm may be used for both the forward and backward passes (e.g., Broyden's method), a DEQ may only need to store ${z}_{1 : T}^{⋆}$ (the equilibrium sequence), **x**_{1:*T*} (input-related, layer-independent variables), and *f_{θ}* for the backward pass. Note that as one may only need the vector-Jacobian product (with dimension *N* × *Td,* where *N* is the minibatch size) in Eq. (11), one may never need to explicitly construct the Jacobian ${J}_{{g}_{θ}}^{⊤} \left|{}_{{z}_{1 : T}^{⋆}}\right.$, which may otherwise be large on long and high-dimensional sequences (with dimension *N* × (*Td*)²). Compared to other deep networks, DEQs may therefore offer a constant-memory alternative that enables models that previously required multiple GPUs and other techniques (e.g., half-precision or gradient checkpointing) to now fit easily into a single GPU.

The above analysis may be independent of the choice of *f_{θ}*, and the memory benefit may be present regardless of the type of *f_{θ}.* However, to find the equilibrium in a reliable and efficient manner, generally *f_{θ}* may need to be stable and constrained. The two following instantiations are examples of stable transformations (the gated activation in TrellisNet and layer normalization in the transformer constrain the output ranges). As both models are drastically different, this illustrate the compatibility of the DEQ approach with all three major families of existing deep sequence networks: *transformers, RNNs* and *temporal convolutional networks (TCNs),* but also with any other weight-tied neural networks.

The following describes an embodiment of the DEQ approach for a trellis network. Generally, TrellisNet is a TCN with two modifications. First, a linear transformation of the original input sequence **x**_{1:*T*} is injected to the convolutional outputs at all layers. Second, the convolutional kernel weights are tied across the depth of the network (i.e., TrellisNet is a weight-tied TCN). This means one may write TrellisNet with convolutional kernel size *k*, dilation s, and non-linearity *ψ* in DEQ-form as
**x̃**_{1:*T*} = Input injection (i.e., linearly transformed inputs by Conv1D(**x**_{1:T}; Wₓ)) ${f}_{θ} \left({z}_{1 : T}; {x}_{1 : T}\right) = ψ \left(Conv1D\left(\left[{u}_{- \left(k-1\right) s :}, {z}_{1 : T}\right]; {W}_{z}\right)+{{x}^{˜}}_{1 : T}\right)$
where **u**_{-(*k*-1)*s*:} is typically: 1) the last (*k* - 1)s elements of the previous sequence's output (if using history padding); or 2) simply zero-paddings. [·,·] means concatenation along the temporal dimension. For *ψ*, LSTM gated activation may be used.

The following describes an embodiment of the DEQ approach for a weight-tied transformer. Instead of using convolutions or recurrence, a transformer network maps the input to a layer into *Q* (query), *K* (key) and *V* (value) and computes the attention score between time *tᵢ, tⱼ* by [*QK*^{T}]*_{i,j}.* This attention score is then normalized via softmax and multiplied with the V sequence to produce the output. Meanwhile, as the transformer is order-invariant, prior works have proposed to inject positional embeddings (PE) to the self-attention operation. Following this design, the *universal transformer* may "recurrently stack" the transformer's self-attention and transition function block *ϕ* through a number of layers.

Accordingly, one may write a weight-tied transformer in DEQ-form as
**x̃**_{1:*T*} = Input injection(i.e., linearly transformed inputs by **x**_{1:T}Wₓ) ${f}_{θ} \left({z}_{1 : T}; {x}_{1 : T}\right) = LN \left(ϕ\left(LN\left(SelfAttention\left({z}_{1 : T}{W}_{QKV}+{{x}^{˜}}_{1 : T};{PE}_{1 : T}\right)\right)\right)\right)$
where ${W}_{QKV} ∈ {ℝ}^{d \times 3 d}$ may produce the *Q, K, V* for the multi-head self-attention, and LN stands for layer normalization. Note that the above adds input injection **x̃**_{1:*T*} to *Q, K, V* in addition to the positional embedding and initializes with ${z}_{1 : T}^{\left[0\right]} = 0$. A 2-layer position-wise feedforward residual block may be used for *ϕ*. In addition, a memory-augmented transformer may be used, where $\left[{z}_{- T ′ :}^{⋆}, {z}_{1 : T}\right]$ (i.e., with history padding of length *T*') and relative positional embedding PE_{-*T'*:*T*} may be fed to the self-attention operation.

**Fig. 3** illustrates, in the form of a graph 300 setting out input *x* against output *y,* a solving for an equilibrium point in 2D for a deep neural network with equilibrium solver (reference numeral 310) and for a weight-tied deep neural network (reference numeral 320) which does not use an equilibrium solver, such as a non-DEQ-based TrellisNet or weight-tied transformer. It is noted that the term 'equilibrium solver' refers to a substitution of a stack of layers and the iterative execution of individual layers thereof by the described use of a numerical root-finding algorithm to find the equilibrium point of the corresponding iterative function, with the latter being considered as 'solving' the iterative function for the equilibrium. Fig. 3 illustrates steps 330 of the root-finding algorithm, the function *g* 340 for which the root solution is sought by the root-finding algorithm, and the resulting equilibrium point 350.

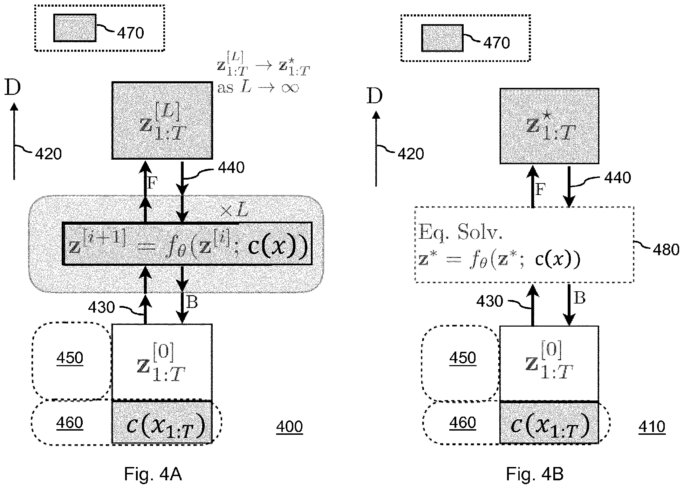

**Fig. 4A** shows a deep neural network 400 with a stack of layers having mutually shared weights and together defining an iterative function, which again may be a non-DEQ-based TrellisNet or weight-tied transformer. Further shown are the neural network depth 420, the forward propagation direction 430 and the backward propagation direction 440, while denoting with dashed outlines 450, 460 fixed data, in particular with reference numeral 450 the history (or zero) padding (e.g., a previous equilibrium) and with reference numeral 460 the input injection, positional embedding, etc..

Further indicated by grey highlighting is the memory storage 470 which is needed at training time so as to be able to perform the subsequent backward propagation pass. In other words, the grey highlighting indicates variables which need to be kept in memory during and after the forward propagation pass so as to be able to perform the subsequent backward propagation pass. It can be seen that such memory storage may be needed for the input sequence **x**_{1:*T*}, the temporary parameters of the iterative function ${z}_{1 : T}^{\left[i+1\right]} = {f}_{θ}^{\left[i\right]} \left({z}_{1 : T}^{\left[i\right]}, {x}_{1 : T}\right)$ for *i* = 0,1,2, ... , *L* and the output ${z}_{1 : T}^{\left[L\right]}$ of the iterative function.

**Fig. 4B** is similar to Fig. 4A but shows an equilibrium solver 480 substituting the stack of layers of the deep neural network 400 of Fig. 4A. While the equilibrium solver 480 may require some memory storage, e.g., for internal parameters, this memory storage is minor and not needed to be kept for the subsequent backward propagation pass.

The DEQ approach is evaluated on both synthetic stress tests and realistic large-scale language modelling tasks (where complex long-term temporal dependencies are involved) using the two aforementioned instantiations of *f_{θ}* (trellis network, weight-tied transformer) using the DEQ approach. On both WikiText-103 (which contains > 100M words and a vocabulary size of > 260K) and the smaller Penn Treebank corpus (where stronger regularizations are needed for conventional deep nets) for word-level language modeling, it is shown that DEQ achieves competitive performance even when compared to state-of-the-art methods (of the same model size, both weight-tied and unweight-tied ones) while using significantly less memory.

Both instantiations of DEQ use Broyden's method to avoid direct computation of the inverse Jacobian, as described earlier. It is noted that the use of DEQ implicitly introduces a new "hyperparameter": the stopping criterion for Broyden iterations. During training, this tolerance *ε* of forward and backward passes is set to $ε = \sqrt{T} ⋅ {10}^{- 6}$ and $\sqrt{T} ⋅ {10}^{- 8}$, respectively. At inference, the tolerance is relaxed to $ε = \sqrt{T} ⋅ {10}^{- 2}$. For the DEQ-TrellisNet instantiation, the settings described in [1] are roughly followed. For DEQ-Transformers, the relative positional embedding described in *'Transformer-XL: Language Modeling with Longer-Term Dependency'* by Zihang Dai is used, with sequences of length 150 at both training and inference on the WikiText-103 dataset. All experiments could run on a single GTX 2080-Ti GPU due to the low memory footprint of DEQ. However, 4 GPUs were used for the WikiText-103 experiments for faster computation.

Evaluations show that the DEQ-approach achieves strong performance on the long-range copy-memory task, as summarized in the following table.

| | Models (Size) | | | |
|---|---|---|---|---|
| | **DEQ-Transformer (14K)** | TCN (16K) | LSTM (14K) | GRU (14K) |
| Copy Memory *T*=400 Loss | **3.5e-6** | 2.7e-5 | 0.0501 | 0.0491 |

Here, TCN refers to https://arxiv.org/abs/1803.01271, LSTM refers to 'Long short-term memory' (Hochreiter et al.), GRU refers to https://arxiv.org/abs/1409.1259. The goal of the *copy memory task* may be considered simple: to explicitly test a sequence model's ability to exactly memorize elements across a long period of time. As shown in the above table, a DEQ-based transformer demonstrates good memory retention over relatively long and low-dimensional sequences (*T* = 400), with even better results than LSTM/GRU.

An issue encountered in prior work that takes a continuous view of deep networks is the challenge of scaling these approaches to real, high-dimensional, large-scale datasets. In the following subsection, the DEQ approach is evaluated on real large-scale language datasets and its effectiveness as a practical sequence model investigated.

Performance on Penn Treebank: following the set of hyperparameters used by [1] for TrellisNet, the DEQ-TrellisNet instantiation is evaluated on word-level language modelling with the PTB corpus. Note that without an explicit notion of "layer", we do not add auxiliary losses, as was done in [1]. As shown in in the following table, when trained from 'scratch', the DEQ-TrellisNet achieves a test perplexity on par with the original deeply supervised TrellisNet. With reference to the table, it is noted that ^{†}the memory footprints are benchmarked on input sequence length 150 and batch size 15, which does not reflect the actual hyperparameters used; the values also do not include memory for word embeddings.

| Word-level Language Modelling w/ Penn Treebank (PTB) | | | | |
|---|---|---|---|---|
| Model | Total Model Size | Non-Embedding Model Size | Test perplexity | Memory ^{†} |
| Variational LSTM | 66M | - | 73.4 | - |
| NAS Cell | 54M | - | 62.4 | - |
| NAS (w/ black-box hyperparameter tuner) | 24M | 20M | 59.7 | - |
| AWD-LSTM | 24M | 20M | 58.8 | - |
| DARTS architecture search (second order) | 23M | 20M | 55.7 | - |
| 60-layer TrellisNet (w/ auxiliary loss, w/o MoS) | 24M | 20M | 57.0 | 8.5GB |
| **DEQ-TrellisNet** | **24M** | **20M** | **57.1** | **1.2GB** |

In the above and elsewhere, 'the Variational LSTM' model refers to https://arxiv.org/abs/1512.05287, NAS Cell refers to https://arxiv.org/abs/1611.01578, the following NAS model refers to https://arxiv.org/abs/1707.05589, AWD-LSTM refers to https://arxiv.org/abs/1708.02182, DARTS refers to https://arxiv.org/abs/1806.09055, and the 60-layer TrellisNet model refers to https://arxiv.org/abs/1607.06450.

Performance on WikiText-103: On the much larger scale WT103 corpus (about 100x larger than PTB), the DEQ-TrellisNet achieves better test perplexity than the original deep TrellisNet. For the Transformer instantiation, the design of the Transformer-XL model (https://arxiv.org/abs/1901.02860) is followed, which may be considered state-of-the-art in language modelling. Specifically, comparisons are made to a "medium" Transformer-XL model (the largest released model that can fit on a GPU) and a "small" Transformer-XL model, while noting that the largest Transformer-XL model has massive memory requirements (due in part to very large embedding sizes, batch sizes, and sequence lengths, which would not be decreased by a DEQ) and can only be trained on a TPU. In following table, it is shown that the DEQs yield competitive performance on par with state-of-the-art approaches on similar model sizes, while outperforming many prior results, while consuming much less memory during training (discussed below). (^{†}See earlier for more details).

| Word-level Language Modelling w/ WikiText-103 (WT103) | | | | |
|---|---|---|---|---|
| Model | Total Model Size | Non-Embedding Model Size | Test perplexity | Memory ^{†} |
| Generic TCN [1] | 150M | 34M | 45.2 | - |
| Gated Linear ConvNet | 230M | - | 37.2 | - |
| AWD-QRNN | 159M | 51M | 33.0 | 7.1GB |
| Relational Memory Core | 195M | 60M | 31.6 | - |
| Transformer-XL (X-large, adaptive embed., on TPU) | >280M | 246M | 18.7 | 12.0GB |
| 70-layer TrellisNet (+ auxiliary loss, etc.) | 180M | 45M | 29.2 | 24.7GB |
| **DEQ-TrellisNet** | **180M** | **45M** | **29.0** | **3.3GB** |
| Transformer-XL (medium, not weight-tied 16 layers) | 170M | 44M | 24.2 | 8.5GB |
| **DEQ-Transformer (medium).** | **178M** | **43M** | **24.5** | **2.7GB** |
| Transformer-XL (small, not weight-tied 4 layers) | 139M | 4.9M | 35.8 | 4.8GB |
| Transformer-XL (small, weight-tied 16 layers) | 138M | 4.5M | 34.9 | 6.8GB |
| **DEQ-Transformer (small)** | **138M** | **4.5M** | **32.4** | **1.1GB** |

In the above and elsewhere, the Gated Linear ConvNet model refers to https://arxiv.org/abs/1612.08083, AWD-QRNN refers to https://arxiv.org/abs/1803.08240, Relational Memory Core refers to 'Relational recurrent neural networks' by Santoro et al., and the 70-layer TrellisNet model refers to https://arxiv.org/abs/1607.06450.

Memory Footprint of DEQ: For conventional deep networks with *L* layers, the training memory complexity may be *O*(*L*) since all intermediate activations are stored for backpropagation. In comparison, DEQs have an *O*(1) (i.e., constant) memory footprint. The reduced memory consumption is verified in the last column of the above tables, with controlled sequence lengths and batch sizes for fairness. On both instantiations, the DEQ approach leads to an over 80% (up to 88%) reduction in memory consumption by the model (excluding word embeddings, which are orthogonal to the comparison here). Note that the DEQ's memory footprint remains competitive even when compared with baselines that are not weight-tied (over 67% reduction), with similar or better accuracy.

Convergence to Equilibrium: the deep equilibrium model may be considered not to have "layers". One factor that may affect the computation in DEQs is the number of Broyden iterations in forward/backward passes, where each forward Broyden step evaluates *f_{θ}* once, and a backward step computes a vector-Jacobian product.

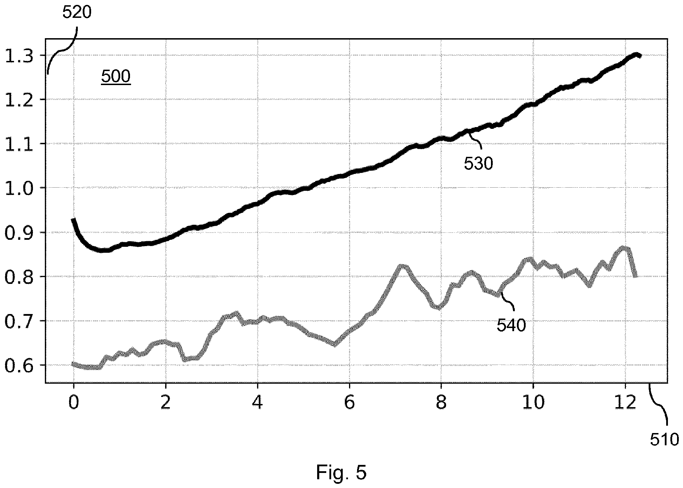

**Fig. 5** shows a graph 500 setting out the number of Broyden iterations 520, as computed by $\frac{TotalBroydenIterations}{SequenceLength}$, of a deep-equilibrium model (DEQ)-based transformer against the training epoch 510 for both the forward propagation 530 and the backward propagation 540. It is found that in general the number of Broyden iterations gradually increases with training epochs. Meanwhile, the backward propagation 540 may require much fewer iterations than the forward propagation 530, due to the linear system in Eq. 11.

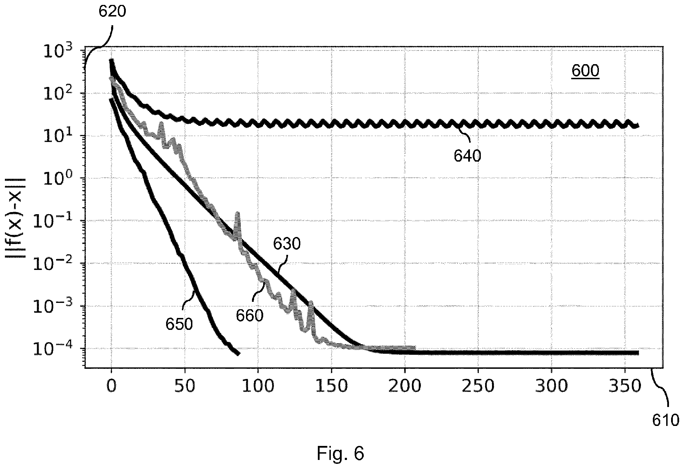

Regarding the convergence to equilibrium, it is found that DEQs may converge to the sequence-level fixed point more, or in many cases much more efficiently than original weight-tied transformers. This is illustrated in **Fig. 6****,** which shows a graph 600 setting out the number of function evaluations 610 against a difference norm 620 for the DEQ-transformer at epoch 1 (reference numeral 650) and at epoch 12 (reference numeral 660) against a weight-tied transformer at epoch 1 (reference numeral 630) and at epoch 12 (reference numeral 640) as reference. It is noted that after 12 epochs, deeply stacked self-attention 640 tends to *oscillate* around the fixed point, which DEQs converge to stably.

It is further noted that it has been found that stacking multiple DEQs may not create extra representational power over a single DEQ, or in other words, a single DEQ may provide a same representational power as a stacking of multiple DEQs.

**Fig. 7** shows a system 700 for controlling a physical system using a trained neural network. The system 700 comprises an input interface 780 for accessing trained model data 196 representing a trained neural network as may be generated by the system 100 of Fig. 1 or the method 200 of Fig. 2 or as described elsewhere. For example, as also illustrated in Fig. 7, the input interface may be constituted by a data storage interface 780 which may access the trained model data 196 from a data storage 790. In general, the input interface 780 and the data storage 790 may be of a same type as described with reference to Fig. 1 for the input interface 180 and the data storage 190. The input data 722 is used as input to the trained neural network to obtain output data representing an inference of the trained neural network. The input data 722 comprises sensor data obtained from one or more sensors. The input data 722 represents an output of a sensor-based observation of a current state of the physical system, i.e., a sensor measurement, and the trained neural network provides an inference based on the current state of the physical system, which may in a specific example be an inference relating to a future state of the physical system. The sensor data as input data 722 is received directly from a sensor 20, via a sensor interface 720.

The system 700 comprises a processor subsystem 760 configured to, during operation of the system 700, apply the trained neural network to the input data 722 to obtain output data representing an inference by the trained neural network, wherein said applying comprises determining the equilibrium point using the substitute for the stack of layers and providing the equilibrium point as a substitute for an output of the stack of layers in the neural network.

It will be appreciated that the same considerations and implementation options apply for the processor subsystem 760 as for the processor subsystem 160 of Fig. 1. It will be further appreciated that the same considerations and implementation options may in general apply to the system 700 as for the system 100 of Fig. 1, unless otherwise noted.

Fig. 7 further shows various optional components of the system 700. For example, in some embodiments, the system 700 may comprise a sensor data interface 720 for directly accessing sensor data 722 acquired by a sensor 20 in an environment 60. The sensor 20 may but does not need to be part of the system 700. The sensor 20 may have any suitable form, such as an image sensor, a lidar sensor, a radar sensor, a pressure sensor, a contain temperature sensor, etc. In some embodiments, the sensor data 722 may sensor measurements of different physical quantities in that it may be obtained from two or more different sensors sensing different physical quantities. The sensor data interface 720 may have any suitable form corresponding in type to the type of sensor, including but not limited to a low-level communication interface, e.g., based on I2C or SPI data communication, or a data storage interface of a type as described above for the data storage interface 780.

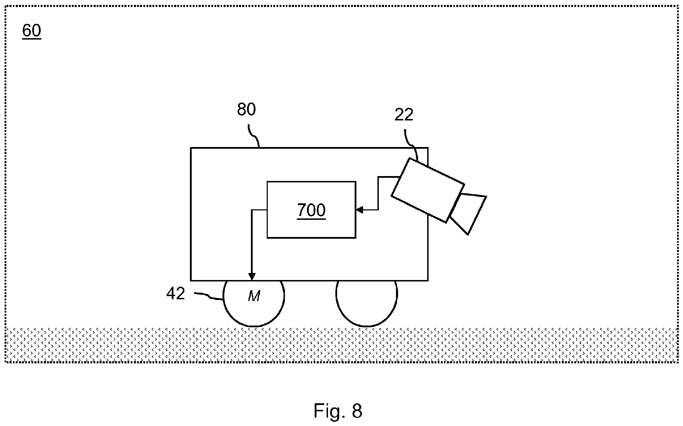

The system 700 comprises an actuator interface 740 for providing control data 742 to an actuator 40 in the environment 60. Such control data is generated by the processor subsystem 760 to control the actuator 40 based on one or more inferences, as may be generated by the trained neural network when applied to the input data 722. For example, the actuator 40 may be an electric, hydraulic, pneumatic, thermal, magnetic and/or mechanical actuator. Specific yet non-limiting examples include electrical motors, electroactive polymers, hydraulic cylinders, piezoelectric actuators, pneumatic actuators, servomechanisms, solenoids, stepper motors, etc. Such type of control is described with reference to Fig. 8 for an (semi-)autonomous vehicle.

In other embodiments (not shown in Fig. 7), the system 700 may comprise an output interface to a rendering device, such as a display, a light source, a loudspeaker, a vibration motor, etc., which may be used to generate a sensory perceptible output signal which may be generated based on one or more inferences by the trained neural network. The sensory perceptible output signal may be directly indicative of the inferences by the trained neural network, but may also represent a derived sensory perceptible output signal, e.g., for use in guidance, navigation or other type of control of the physical system.

In general, each system described in this specification, including but not limited to the system 100 of Fig. 1 and the system 700 of Fig. 7, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers. In some embodiments, the system 700 may be part of vehicle, robot or similar physical entity, and/or may be represent a control system configured to control the physical entity.

**Fig. 8** shows an example of the above, in that the system 700 is shown to be a control system of an (semi-)autonomous vehicle 80 operating in an environment 60. The autonomous vehicle 80 may be autonomous in that it may comprise an autonomous driving system or a driving assistant system, with the latter also being referred to as a semiautonomous system. The autonomous vehicle 80 may for example incorporate the system 700 to control the steering and the braking of the autonomous vehicle based on sensor data obtained from a video camera 22 integrated into the vehicle 80. For example, the system 700 may control an electric motor 42 to perform (regenerative) braking in case the autonomous vehicle 80 is expected to collide with a traffic participant. The system 700 may control the steering and/or braking to avoid collision with the traffic participant. For that purpose, the system 700 may infer a current or future state of the vehicle with respect its environment, including the traffic participant, based on the sensor data obtained from the video camera. If the state of the vehicle, e.g., its position relative to the traffic participant, is expected to result in a collision, the system 700 may take corresponding action.

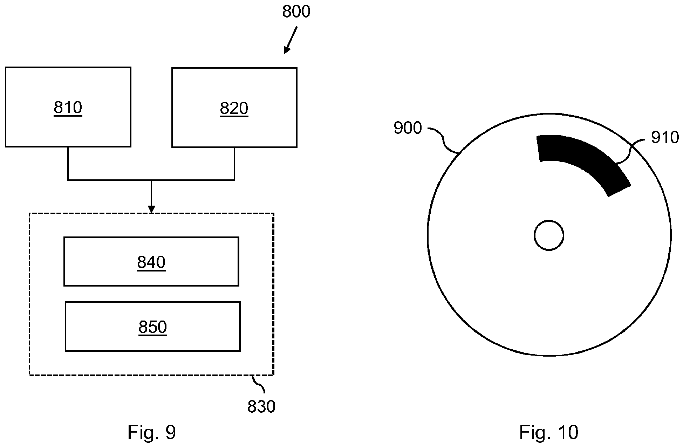

**Fig. 9** shows a computer-implemented method 800 for using a trained neural network for inference. The method 800 may correspond to an operation of the system 700 of Fig. 7, but may also be performed using or by any other system, apparatus or device.

The computer-implemented method 800 is shown to comprise, in a step titled "ACCESSING TRAINED NEURAL NETWORK", accessing 810 a trained neural network as described elsewhere in this specification. The method 800 is further shown to comprise, in a step titled "ACCESSING INPUT DATA", accessing 820 input data for the trained neural network. The method 800 is further shown to comprise, in a step titled "APPLYING TRAINED NEURAL NETWORK TO INPUT DATA", applying 830 the trained neural network to the input data to obtain output data representing an inference by the trained neural network. Said applying 830 by the method 800 is shown to comprise, in a step titled "DETERMINING EQUILIBRIUM POINT", determining 840 the equilibrium point using the substitute for the stack of layers, and in a step titled "PROVIDING EQUILIBRIUM POINT AS SUBSTITUTE FOR OUTPUT OF STACK OF LAYERS", providing 850 the equilibrium point as a substitute for an output of the stack of layers in the neural network.

It will be appreciated that, in general, the operations or steps of the computer-implemented methods 200 and 800 of respectively Figs. 2 and 9 may be performed in any suitable order, e.g., consecutively, simultaneously, or a combination thereof, subject to, where applicable, a particular order being necessitated, e.g., by input/output relations.

Each method, algorithm or pseudo-code described in this specification may be implemented on a computer as a computer implemented method, as dedicated hardware, or as a combination of both. As also illustrated in **Fig. 10****,** instructions for the computer, e.g., executable code, may be stored on a computer-readable medium 900, e.g., in the form of a series 910 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, servers, online software, etc. Fig. 10 shows an optical disc 910. In an alternative embodiment of the computer-readable medium 900, the computer-readable medium may comprise model data 910 defining a trained neural network as described elsewhere in this specification.

In accordance with an abstract of the specification, it is noted that a neural network may comprise an iterative function (*z*^{[*i*+1]} = *f*(*zⁱ, θ, c*(*x*)). Such an iterative function is known in the field of machine learning to be representable by a stack of layers which have mutually shared weights. As described in this specification, this stack of layers may during training be replaced by the use of a numerical root-finding algorithm to find an equilibrium of the iterative function in which a further execution of the iterative function would not substantially further change the output of the iterative function. Effectively, the stack of layers may be replaced by a numerical equilibrium solver. The use of the numerical root-finding algorithm is demonstrated to greatly reduce the memory footprint during training while achieving similar accuracy as state-of-the-art prior art models.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer.

## Claims

1. A computer-implemented method (200) for training a neural network to control a physical system based on a state of the physical system which is inferred by the neural network from sensor data wherein the physical system is an autonomous or semiautonomous vehicle, a robotic system, or a manufacturing system, comprising:
- providing a neural network, wherein the providing of the neural network comprises providing an iterative function as a substitute for a stack of layers of the neural network, wherein respective layers of the stack of layers being substituted have mutually shared weights and provide a same transformation in each layer and receive as input:
- an output of a previous layer, or for a first layer of the stack of layers, an initial activation; and
- a part of an input of the stack of layers;
- accessing (210) training data for the neural network;
- iteratively training (230) the neural network using the training data, wherein an iteration of the training comprises a forward propagation part and a backward propagation part, wherein performing the forward propagation part comprises:
- determining (240) an equilibrium point of the iterative function, wherein the equilibrium point is a fixed point to which the iterative function converges, wherein determining the equilibrium point comprises using a numerical root-finding algorithm to find a root solution for the iterative function minus its input, and
- providing (250) the equilibrium point as a substitute for an output of the stack of layers in the neural network;
wherein performing the backward propagation part comprises:
- computing respective partial derivatives of the iterative function with respect to the weights and the part of the input;
- computing a gradient at an input of the iterative execution layer for the weights and/or the part of the input as a function of a respective partial derivative and a backpropagated gradient at the output of the iterative execution layer;
- after the training, outputting (260) a trained neural network.

2. The computer-implemented method (200) according to claim 1, wherein computing the gradient comprises solving a linear system and computing the gradient as a function of a solution of the linear system.

3. The computer-implemented method (200) according to claim 2, wherein solving the linear system comprises using a fast matrix vector multiplication technique.

4. The computer-implemented method (200) according to claim 2 or 3, wherein solving the linear system comprises using an instance of the numerical root-finding algorithm or another type of numerical root-finding algorithm.

5. The computer-implemented method (200) according to any one of claims 1 to 4, wherein the numerical root-finding algorithm is a computer-implementation of Newton's method or a computer-implementation of a quasi-Newton method or specifically a computer-implementation of Broyden's method.

6. The computer-implemented method (200) according to any one of claims 1 to 5, wherein outputting (260) the trained neural network comprises representing the stack of layers in the trained neural network by at least i) a data representation of a layer of the stack of layers, and ii) a hyperparameter defining a number of layers of the stack of layers at which the output of the stack of layers reaches or to a selected degree approximates the equilibrium point during forward propagation.

7. The computer-implemented method (200) according to any one of claims 1 to 5, wherein outputting (260) the trained neural network comprises representing the stack of layers in the trained neural network by at least i) the mutually shared weights, ii) an identifier or a data-representation of the numerical root-finding algorithm, and iii) one or more parameters for using the numerical root-finding algorithm to determine the equilibrium point.

8. The computer-implemented method (200) according to any one of claims 1 to 5, wherein outputting (260) the trained neural network comprises representing the stack of layers in the trained neural network by at least i) a data representation of a layer of the stack of layers, and ii) computer-readable instructions defining a convergence check for determining when an output obtained by an iterative execution of the layer reaches or to a selected degree approximates the equilibrium point.

9. The computer-implemented method (200) according to any one of claims 1 to 8, wherein the neural network is a feedforward neural network or a recurrent neural network.

10. The computer-implemented method (200) according to any one of claims 1 to 8, wherein the training data is time-sequential data, and wherein the neural network is one of a group of: a Trellis network, a transformer network and a temporal convolution network.

11. A computer-implemented method (800) for using a trained neural network to control a physical system based on a state of the physical system which is inferred from sensor data, wherein the physical system is an autonomous or semiautonomous vehicle, a robotic system, or a manufacturing system, the method comprising:
- accessing (810) a trained neural network, wherein the neural network comprises a substitute for a stack of layers of which respective layers have mutually shared weights and provide a same transformation in each layer and receive as input:
- an output of a previous layer, or for a first layer of the stack of layers, an initial activation, and
- a part of the input of the stack of layers;
wherein the stack of layers forms an iterative function;
wherein the substitute for the stack of layers comprises:
i) the mutually shared weights, ii) an identifier or a data-representation of a numerical root-finding algorithm, and iii) one or more parameters for using the numerical root-finding algorithm to determine an equilibrium point of the iterative function, wherein the equilibrium point is a fixed point to which the iterative function converges; or
i) a data representation of a layer of the stack of layers, and ii) computer-readable instructions defining a convergence check for determining when an output obtained by an iterative execution of the layer reaches or to a selected degree approximates the equilibrium point;
- accessing (820) input data for the trained neural network, wherein the input data comprises sensor data obtained from one or more sensors;
- applying (830) the trained neural network to the input data to obtain output data representing an inference of a state of the physical system by the trained neural network, said applying comprising determining (840) the equilibrium point using the substitute for the stack of layers and providing (850) the equilibrium point as a substitute for an output of the stack of layers in the neural network;
- controlling an actuator of the physical system based on the inference of the state of the physical system.

12. A computer-readable medium (900) comprising transitory or non-transitory data (910) representing instructions arranged to cause a processor system to perform the computer-implemented method according to any one of claims 1 to 11.

13. A system (100) for training a neural network to control a physical system based on a state of the physical system which is inferred by the neural network from sensor data, wherein the physical system is an autonomous or semiautonomous vehicle, a robotic system, or a manufacturing system, the system comprising:
- an input interface (180) for accessing training data for the neural network;
- a memory for storing temporary data during forward and backward passes of the training;
- a processor subsystem (160) configured to:
provide a neural network, wherein the providing of the neural network comprises providing an iterative function as a substitute for a stack of layers of the neural network, wherein respective layers of the stack of layers being substituted have mutually shared weights and provide a same transformation in each layer and receive as input:
- an output of a previous layer, or for a first layer of the stack of layers, an initial activation, and
- a part of the input of the stack of layers;
iteratively train the neural network using the training data, wherein an iteration of the training comprises a forward propagation part and a backward propagation part, wherein performing the forward propagation part comprises:
- determining an equilibrium point of the iterative function, wherein the equilibrium point is a fixed point to which the iterative function converges, wherein determining the equilibrium point comprises using a numerical root-finding algorithm to find a root solution for the iterative function minus its input, and
- providing the equilibrium point as a substitute for an output of the stack of layers in the neural network;
wherein performing the backward propagation part comprises:
- computing respective partial derivatives of the iterative function with respect to the weights and the part of the input;
- computing a gradient at an input of the iterative execution layer for the weights and/or the part of the input as a function of a respective partial derivative and a backpropagated gradient at the output of the iterative execution layer;
- an output interface (180) for outputting a trained neural network after the training.

14. A control system (700) for controlling a physical system based on a state of the physical system which is inferred from sensor data, wherein the physical system is an autonomous or semiautonomous vehicle, a robotic system, or a manufacturing system, the control system comprising:
- an input interface (780) for accessing a trained neural network, wherein the trained neural network comprises a substitute for a stack of layers of which respective layers have mutually shared weights and provide a same transformation in each layer and receive as input:
- an output of a previous layer, or for a first layer of the stack of layers, an initial activation, and
- a part of an input of the stack of layers;
wherein the stack of layers forms an iterative function;
wherein the substitute for the stack of layers comprises:
i) the mutually shared weights, ii) an identifier or a data-representation of a numerical root-finding algorithm, and iii) one or more parameters for using the numerical root-finding algorithm to determine an equilibrium point of the iterative function, wherein the equilibrium point is a fixed point to which the iterative function converges; or
i) a data representation of a layer of the stack of layers, and ii) computer-readable instructions defining a convergence check for determining when an output obtained by an iterative execution of the layer reaches or to a selected degree approximates the equilibrium point;
- a sensor data interface (720) for accessing input data for the trained neural network, wherein the input data comprises sensor data obtained from one or more sensors;
- an actuator interface (740) to an actuator of the physical system:
- a processor subsystem (760) configured for:
applying the trained neural network to the input data to obtain output data representing an inference of a state of the physical system by the trained neural network, said applying comprising determining, in a respective forward pass, the equilibrium point using the substitute for the stack of layers and providing the equilibrium point as a substitute for an output of the stack of layers in the neural network;
via the actuator interface, controlling the actuator based on the inference of the state of the physical system.

## Patentansprüche

1. Ein computerimplementiertes Verfahren (200) zum Trainieren eines neuronalen Netzwerks zum Steuern eines physischen Systems basierend auf einem Zustand des physischen Systems, der durch das neuronale Netzwerk aus Sensordaten inferiert wird, wobei das physische System ein autonomes oder semiautonomes Fahrzeug, ein Robotersystem oder ein Fertigungssystem ist, umfassend:
- Bereitstellen eines neuronalen Netzwerks, wobei das Bereitstellen des neuronalen Netzwerks das Bereitstellen einer iterativen Funktion als Ersatz für einen Stapel von Schichten des neuronalen Netzwerks umfasst, wobei jeweilige Schichten des zu ersetzenden Stapels von Schichten untereinander geteilte Gewichte aufweisen und in jeder Schicht dieselbe Transformation bereitstellen und als Eingabe empfangen:
- eine Ausgabe einer vorhergehenden Schicht, oder für eine erste Schicht des Stapels von Schichten, eine anfängliche Aktivierung; und
- einen Teil einer Eingabe des Stapels von Schichten;
- Zugreifen (210) auf Trainingsdaten für das neuronale Netzwerk;
- iteratives Trainieren (230) des neuronalen Netzwerks unter Verwendung der Trainingsdaten, wobei eine Iteration des Trainings einen Vorwärtspropagationsteil und einen Rückwärtspropagationsteil umfasst, wobei das Durchführen des Vorwärtspropagationsteils umfasst:
- Bestimmen (240) eines Gleichgewichtspunkts der iterativen Funktion, wobei der Gleichgewichtspunkt ein Fixpunkt ist, zu dem die iterative Funktion konvergiert, wobei das Bestimmen des Gleichgewichtspunkts das Verwenden eines numerischen Nullstellenfindungsalgorithmus umfasst, um eine Nullstellenlösung für die iterative Funktion minus ihre Eingabe zu finden, und
- Bereitstellen (250) des Gleichgewichtspunkts als Ersatz für eine Ausgabe des Stapels von Schichten in dem neuronalen Netzwerk;
wobei das Durchführen des Rückwärtspropagationsteils umfasst:
- Berechnen jeweiliger partieller Ableitungen der iterativen Funktion in Bezug auf die Gewichte und den Teil der Eingabe;
- Berechnen eines Gradienten an einer Eingabe der iterativen Ausführungsschicht für die Gewichte und/oder den Teil der Eingabe als Funktion einer jeweiligen partiellen Ableitung und eines rückpropagierten Gradienten an der Ausgabe der iterativen Ausführungsschicht;
- nach dem Training, Ausgeben (260) eines trainierten neuronalen Netzwerks.

2. Das computerimplementierte Verfahren (200) nach Anspruch 1, wobei das Berechnen des Gradienten das Lösen eines linearen Systems und das Berechnen des Gradienten als Funktion einer Lösung des linearen Systems umfasst.

3. Das computerimplementierte Verfahren (200) nach Anspruch 2, wobei das Lösen des linearen Systems das Verwenden einer schnellen Matrix-Vektor-Multiplikationstechnik umfasst.

4. Das computerimplementierte Verfahren (200) nach Anspruch 2 oder 3, wobei das Lösen des linearen Systems das Verwenden einer Instanz des numerischen Nullstellenfindungsalgorithmus oder eines anderen Typs eines numerischen Nullstellenfindungsalgorithmus umfasst.

5. Das computerimplementierte Verfahren (200) nach einem der Ansprüche 1 bis 4, wobei der numerische Nullstellenfindungsalgorithmus eine Computerimplementierung des Newton-Verfahrens oder eine Computerimplementierung eines Quasi-Newton-Verfahrens oder speziell eine Computerimplementierung des Broyden-Verfahrens ist.

6. Das computerimplementierte Verfahren (200) nach einem der Ansprüche 1 bis 5, wobei das Ausgeben (260) des trainierten neuronalen Netzwerks das Darstellen des Stapels von Schichten in dem trainierten neuronalen Netzwerk durch mindestens i) eine Datendarstellung einer Schicht des Stapels von Schichten, und ii) einen Hyperparameter, der eine Anzahl von Schichten des Stapels von Schichten definiert, bei der die Ausgabe des Stapels von Schichten während der Vorwärtspropagation den Gleichgewichtspunkt erreicht oder bis zu einem ausgewählten Grad approximiert, umfasst.

7. Das computerimplementierte Verfahren (200) nach einem der Ansprüche 1 bis 5, wobei das Ausgeben (260) des trainierten neuronalen Netzwerks das Darstellen des Stapels von Schichten in dem trainierten neuronalen Netzwerk durch mindestens i) die untereinander geteilten Gewichte, ii) eine Kennung oder Datendarstellung des numerischen Nullstellenfindungsalgorithmus, und iii) einen oder mehrere Parameter für die Verwendung des numerischen Nullstellenfindungsalgorithmus zum Bestimmen des Gleichgewichtspunkts umfasst.

8. Das computerimplementierte Verfahren (200) nach einem der Ansprüche 1 bis 5, wobei das Ausgeben (260) des trainierten neuronalen Netzwerks das Darstellen des Stapels von Schichten in dem trainierten neuronalen Netzwerk durch mindestens i) eine Datendarstellung einer Schicht des Stapels von Schichten, und ii) computerlesbare Anweisungen, die eine Konvergenzprüfung für die Bestimmung dessen definieren, wann eine durch eine iterative Ausführung der Schicht erhaltene Ausgabe den Gleichgewichtspunkt erreicht oder bis zu einem ausgewählten Grad approximiert, umfasst.

9. Das computerimplementierte Verfahren (200) nach einem der Ansprüche 1 bis 8, wobei das neuronale Netzwerk ein neuronales Feedforward-Netzwerk oder ein rekurrentes neuronales Netzwerk ist.

10. Das computerimplementierte Verfahren (200) nach einem der Ansprüche 1 bis 8, wobei die Trainingsdaten zeitsequentielle Daten sind, und wobei das neuronale Netzwerk eines aus einer Gruppe von: einem Trellis-Netzwerk, einem Transformer-Netzwerk und einem temporalen Faltungsnetzwerk ist.

11. Ein computerimplementiertes Verfahren (800) zum Verwenden eines trainierten neuronalen Netzwerks zum Steuern eines physischen Systems basierend auf einem Zustand des physischen Systems, der aus Sensordaten inferiert wird, wobei das physische System ein autonomes oder semiautonomes Fahrzeug, ein Robotersystem oder ein Fertigungssystem ist, wobei das Verfahren umfasst:
- Zugreifen (810) auf ein trainiertes neuronales Netzwerk, wobei das neuronale Netzwerk einen Ersatz für einen Stapel von Schichten umfasst, dessen jeweilige Schichten untereinander geteilte Gewichte aufweisen und in jeder Schicht dieselbe Transformation bereitstellen und als Eingabe empfangen:
- eine Ausgabe einer vorhergehenden Schicht, oder für eine erste Schicht des Stapels von Schichten, eine anfängliche Aktivierung, und
- einen Teil der Eingabe des Stapels von Schichten;
wobei der Stapel von Schichten eine iterative Funktion bildet;
wobei der Ersatz für den Stapel von Schichten umfasst:
i) die untereinander geteilten Gewichte, ii) eine Kennung oder Datendarstellung eines numerischen Nullstellenfindungsalgorithmus, und iii) einen oder mehrere Parameter für die Verwendung des numerischen Nullstellenfindungsalgorithmus zum Bestimmen eines Gleichgewichtspunkts der iterativen Funktion, wobei der Gleichgewichtspunkt ein Fixpunkt ist, zu dem die iterative Funktion konvergiert; oder
i) eine Datendarstellung einer Schicht des Stapels von Schichten, und ii) computerlesbare Anweisungen, die eine Konvergenzprüfung für die Bestimmung dessen definieren, wann eine durch eine iterative Ausführung der Schicht erhaltene Ausgabe den Gleichgewichtspunkt erreicht oder bis zu einem ausgewählten Grad approximiert;
- Zugreifen (820) auf Eingabedaten für das trainierte neuronale Netzwerk, wobei die Eingabedaten Sensordaten umfassen, die von einem oder mehreren Sensoren erhalten werden;
- Anwenden (830) des trainierten neuronalen Netzwerks auf die Eingabedaten, um Ausgabedaten zu erhalten, die eine Inferenz eines Zustands des physischen Systems durch das trainierte neuronale Netzwerk darstellen, wobei das genannte Anwenden das Bestimmen (840) des Gleichgewichtspunkts unter Verwendung des Ersatzes für den Stapel von Schichten und das Bereitstellen (850) des Gleichgewichtspunkts als Ersatz für eine Ausgabe des Stapels von Schichten in dem neuronalen Netzwerk umfasst;
- Steuern eines Aktuators des physischen Systems basierend auf der Inferenz des Zustands des physischen Systems.

12. Ein computerlesbares Medium (900), umfassend transitorische oder nichttransitorische Daten (910), die Anweisungen darstellen, die dazu eingerichtet sind, ein Prozessorsystem zu veranlassen, das computerimplementierte Verfahren nach einem der Ansprüche 1 bis 11 durchzuführen.

13. Ein System (100) zum Trainieren eines neuronalen Netzwerks zum Steuern eines physischen Systems basierend auf einem Zustand des physischen Systems, der durch das neuronale Netzwerk aus Sensordaten inferiert wird, wobei das physische System ein autonomes oder semiautonomes Fahrzeug, ein Robotersystem oder ein Fertigungssystem ist, wobei das System umfasst:
- eine Eingabeschnittstelle (180) zum Zugreifen auf Trainingsdaten für das neuronale Netzwerk;
- einen Speicher zum Speichern temporärer Daten während Vorwärts- und Rückwärtsdurchläufen des Trainings;
- ein Prozessorsubsystem (160), das konfiguriert ist, um:
ein neuronales Netzwerk bereitzustellen, wobei das Bereitstellen des neuronalen Netzwerks das Bereitstellen einer iterativen Funktion als Ersatz für einen Stapel von Schichten des neuronalen Netzwerks umfasst, wobei jeweilige Schichten des zu ersetzenden Stapels von Schichten untereinander geteilte Gewichte aufweisen und in jeder Schicht dieselbe Transformation bereitstellen und als Eingabe empfangen:
- eine Ausgabe einer vorhergehenden Schicht, oder für eine erste Schicht des Stapels von Schichten, eine anfängliche Aktivierung, und
- einen Teil der Eingabe des Stapels von Schichten;
das neuronale Netzwerk unter Verwendung der Trainingsdaten iterativ zu trainieren, wobei eine Iteration des Trainings einen Vorwärtspropagationsteil und einen Rückwärtspropagationsteil umfasst, wobei das Durchführen des Vorwärtspropagationsteils umfasst:
- Bestimmen eines Gleichgewichtspunkts der iterativen Funktion, wobei der Gleichgewichtspunkt ein Fixpunkt ist, zu dem die iterative Funktion konvergiert, wobei das Bestimmen des Gleichgewichtspunkts das Verwenden eines numerischen Nullstellenfindungsalgorithmus umfasst, um eine Nullstellenlösung für die iterative Funktion minus ihre Eingabe zu finden, und
- Bereitstellen des Gleichgewichtspunkts als Ersatz für eine Ausgabe des Stapels von Schichten in dem neuronalen Netzwerk;
wobei das Durchführen des Rückwärtspropagationsteils umfasst:
- Berechnen jeweiliger partieller Ableitungen der iterativen Funktion in Bezug auf die Gewichte und den Teil der Eingabe;
- Berechnen eines Gradienten an einer Eingabe der iterativen Ausführungsschicht für die Gewichte und/oder den Teil der Eingabe als Funktion einer jeweiligen partiellen Ableitung und eines rückpropagierten Gradienten an der Ausgabe der iterativen Ausführungsschicht;
- eine Ausgabeschnittstelle (180) zum Ausgeben eines trainierten neuronalen Netzwerks nach dem Training.

14. Ein Steuersystem (700) zum Steuern eines physischen Systems basierend auf einem Zustand des physischen Systems, der aus Sensordaten inferiert wird, wobei das physische System ein autonomes oder semiautonomes Fahrzeug, ein Robotersystem oder ein Fertigungssystem ist, wobei das Steuersystem umfasst:
- eine Eingabeschnittstelle (780) zum Zugreifen auf ein trainiertes neuronales Netzwerk, wobei das trainierte neuronale Netzwerk einen Ersatz für einen Stapel von Schichten umfasst, dessen jeweilige Schichten untereinander geteilte Gewichte aufweisen und in jeder Schicht dieselbe Transformation bereitstellen und als Eingabe empfangen:
- eine Ausgabe einer vorhergehenden Schicht, oder für eine erste Schicht des Stapels von Schichten, eine anfängliche Aktivierung, und
- einen Teil einer Eingabe des Stapels von Schichten;
wobei der Stapel von Schichten eine iterative Funktion bildet;
wobei der Ersatz für den Stapel von Schichten umfasst:
i) die untereinander geteilten Gewichte, ii) eine Kennung oder Datendarstellung eines numerischen Nullstellenfindungsalgorithmus, und iii) einen oder mehrere Parameter für die Verwendung des numerischen Nullstellenfindungsalgorithmus zum Bestimmen eines Gleichgewichtspunkts der iterativen Funktion, wobei der Gleichgewichtspunkt ein Fixpunkt ist, zu dem die iterative Funktion konvergiert; oder
i) eine Datendarstellung einer Schicht des Stapels von Schichten, und ii) computerlesbare Anweisungen, die eine Konvergenzprüfung für die Bestimmung dessen definieren, wann eine durch eine iterative Ausführung der Schicht erhaltene Ausgabe den Gleichgewichtspunkt erreicht oder bis zu einem ausgewählten Grad approximiert;
- eine Sensordatenschnittstelle (720) zum Zugreifen auf Eingabedaten für das trainierte neuronale Netzwerk,
wobei die Eingabedaten Sensordaten umfassen, die von einem oder mehreren Sensoren erhalten werden;
- eine Aktuatorschnittstelle (740) zu einem Aktuator des physischen Systems;
- ein Prozessorsubsystem (760), das konfiguriert ist für:
das Anwenden des trainierten neuronalen Netzwerks auf die Eingabedaten, um Ausgabedaten zu erhalten, die eine Inferenz eines Zustands des physischen Systems durch das trainierte neuronale Netzwerk darstellen, wobei das genannte Anwenden das Bestimmen, in einem jeweiligen Vorwärtsdurchlauf, des Gleichgewichtspunkts unter Verwendung des Ersatzes für den Stapel von Schichten und das Bereitstellen des Gleichgewichtspunkts als Ersatz für eine Ausgabe des Stapels von Schichten in dem neuronalen Netzwerk umfasst;
über die Aktuatorschnittstelle, das Steuern des Aktuators basierend auf der Inferenz des Zustands des physischen Systems.

## Revendications

1. Un procédé mis en œuvre par ordinateur (200) pour entraîner un réseau neuronal afin de commander un système physique sur la base d'un état du système physique qui est inféré par le réseau neuronal à partir de données de capteur,
dans lequel le système physique est un véhicule autonome ou semi-autonome, un système robotique, ou un système de fabrication, comprenant :
- fournir un réseau neuronal, dans lequel la fourniture du réseau neuronal comprend le fait de fournir une fonction itérative en tant que substitut à un empilement de couches du réseau neuronal, dans lequel les couches respectives de l'empilement de couches faisant l'objet de la substitution ont des poids mutuellement partagés et fournissent une même transformation dans chaque couche et reçoivent en entrée :
- une sortie d'une couche précédente, ou pour une première couche de l'empilement de couches, une activation initiale ; et
- une partie d'une entrée de l'empilement de couches ;
- accéder (210) à des données d'entraînement pour le réseau neuronal ;
- entraîner itérativement (230) le réseau neuronal en utilisant les données d'entraînement, dans lequel une itération de l'entraînement comprend une partie de propagation avant et une partie de rétropropagation, dans lequel l'exécution de la partie de propagation avant comprend :
- déterminer (240) un point d'équilibre de la fonction itérative, dans lequel le point d'équilibre est un point fixe vers lequel la fonction itérative converge, dans lequel la détermination du point d'équilibre comprend l'utilisation d'un algorithme numérique de recherche de racine pour trouver une solution racine pour la fonction itérative moins son entrée, et
- fournir (250) le point d'équilibre en tant que substitut à une sortie de l'empilement de couches dans le réseau neuronal ;
dans lequel l'exécution de la partie de rétropropagation comprend :
- calculer des dérivées partielles respectives de la fonction itérative par rapport aux poids et à la partie de l'entrée ;
- calculer un gradient à une entrée de la couche d'exécution itérative pour les poids et/ou la partie de l'entrée en fonction d'une dérivée partielle respective et d'un gradient rétropropagé à la sortie de la couche d'exécution itérative ;
- après l'entraînement, fournir en sortie (260) un réseau neuronal entraîné.

2. Le procédé mis en œuvre par ordinateur (200) selon la revendication 1, dans lequel le calcul du gradient comprend la résolution d'un système linéaire et le calcul du gradient en fonction d'une solution du système linéaire.

3. Le procédé mis en œuvre par ordinateur (200) selon la revendication 2, dans lequel la résolution du système linéaire comprend l'utilisation d'une technique rapide de multiplication matrice-vecteur.

4. Le procédé mis en œuvre par ordinateur (200) selon la revendication 2 ou 3, dans lequel la résolution du système linéaire comprend l'utilisation d'une instance de l'algorithme numérique de recherche de racine ou d'un autre type d'algorithme numérique de recherche de racine.

5. Le procédé mis en œuvre par ordinateur (200) selon l'une quelconque des revendications 1 à 4, dans lequel l'algorithme numérique de recherche de racine est une mise en œuvre par ordinateur de la méthode de Newton ou une mise en œuvre par ordinateur d'une méthode quasi-Newton ou spécifiquement une mise en œuvre par ordinateur de la méthode de Broyden.

6. Le procédé mis en œuvre par ordinateur (200) selon l'une quelconque des revendications 1 à 5, dans lequel la fourniture en sortie (260) du réseau neuronal entraîné comprend le fait de représenter l'empilement de couches dans le réseau neuronal entraîné par au moins i) une représentation de données d'une couche de l'empilement de couches, et ii) un hyperparamètre définissant un nombre de couches de l'empilement de couches auquel la sortie de l'empilement de couches atteint ou à un degré sélectionné approche le point d'équilibre pendant la propagation avant.

7. Le procédé mis en œuvre par ordinateur (200) selon l'une quelconque des revendications 1 à 5, dans lequel la fourniture en sortie (260) du réseau neuronal entraîné comprend le fait de représenter l'empilement de couches dans le réseau neuronal entraîné par au moins i) les poids mutuellement partagés, ii) un identifiant ou une représentation-de-données de l'algorithme numérique de recherche de racine, et iii) un ou plusieurs paramètres pour utiliser l'algorithme numérique de recherche de racine afin de déterminer le point d'équilibre.

8. Le procédé mis en œuvre par ordinateur (200) selon l'une quelconque des revendications 1 à 5, dans lequel la fourniture en sortie (260) du réseau neuronal entraîné comprend le fait de représenter l'empilement de couches dans le réseau neuronal entraîné par au moins i) une représentation de données d'une couche de l'empilement de couches, et ii) des instructions lisibles par ordinateur définissant un contrôle de convergence pour déterminer quand une sortie obtenue par une exécution itérative de la couche atteint ou à un degré sélectionné approche le point d'équilibre.

9. Le procédé mis en œuvre par ordinateur (200) selon l'une quelconque des revendications 1 à 8, dans lequel le réseau neuronal est un réseau neuronal à propagation avant ou un réseau neuronal récurrent.

10. Le procédé mis en œuvre par ordinateur (200) selon l'une quelconque des revendications 1 à 8, dans lequel les données d'entraînement sont des données séquentielles dans le temps, et dans lequel le réseau neuronal est l'un d'un groupe de : un réseau Trellis, un réseau transformeur et un réseau de convolution temporelle.

11. Un procédé mis en œuvre par ordinateur (800) pour utiliser un réseau neuronal entraîné afin de commander un système physique sur la base d'un état du système physique qui est inféré à partir de données de capteur, dans lequel le système physique est un véhicule autonome ou semi-autonome, un système robotique, ou un système de fabrication, le procédé comprenant :
- accéder (810) à un réseau neuronal entraîné, dans lequel le réseau neuronal comprend un substitut à un empilement de couches dont les couches respectives ont des poids mutuellement partagés et fournissent une même transformation dans chaque couche et reçoivent en entrée :
- une sortie d'une couche précédente, ou pour une première couche de l'empilement de couches, une activation initiale, et
- une partie de l'entrée de l'empilement de couches ;
dans lequel l'empilement de couches forme une fonction itérative ;
dans lequel le substitut à l'empilement de couches comprend :
i) les poids mutuellement partagés, ii) un identifiant ou une représentation-de-données d'un algorithme numérique de recherche de racine, et iii) un ou plusieurs paramètres pour utiliser l'algorithme numérique de recherche de racine afin de déterminer un point d'équilibre de la fonction itérative, dans lequel le point d'équilibre est un point fixe vers lequel la fonction itérative converge ; ou
i) une représentation de données d'une couche de l'empilement de couches, et ii) des instructions lisibles par ordinateur définissant un contrôle de convergence pour déterminer quand une sortie obtenue par une exécution itérative de la couche atteint ou à un degré sélectionné approche le point d'équilibre ;
- accéder (820) à des données d'entrée pour le réseau neuronal entraîné, dans lequel les données d'entrée comprennent des données de capteur obtenues à partir d'un ou plusieurs capteurs ;
- appliquer (830) le réseau neuronal entraîné aux données d'entrée pour obtenir des données de sortie représentant une inférence d'un état du système physique par le réseau neuronal entraîné, ladite application comprenant le fait de déterminer (840) le point d'équilibre en utilisant le substitut à l'empilement de couches et de fournir (850) le point d'équilibre en tant que substitut à une sortie de l'empilement de couches dans le réseau neuronal ;
- commander un actionneur du système physique sur la base de l'inférence de l'état du système physique.

12. Un support lisible par ordinateur (900) comprenant des données transitoires ou non-transitoires (910) représentant des instructions agencées pour amener un système de processeur à exécuter le procédé mis en œuvre par ordinateur selon l'une quelconque des revendications 1 à 11.

13. Un système (100) pour entraîner un réseau neuronal afin de commander un système physique sur la base d'un état du système physique qui est inféré par le réseau neuronal à partir de données de capteur, dans lequel le système physique est un véhicule autonome ou semi-autonome, un système robotique, ou un système de fabrication, le système comprenant :
- une interface d'entrée (180) pour accéder à des données d'entraînement pour le réseau neuronal ;
- une mémoire pour stocker des données temporaires pendant des passes avant et arrière de l'entraînement ;
- un sous-système de processeur (160) configuré pour :
fournir un réseau neuronal, dans lequel la fourniture du réseau neuronal comprend le fait de fournir une fonction itérative en tant que substitut à un empilement de couches du réseau neuronal, dans lequel les couches respectives de l'empilement de couches faisant l'objet de la substitution ont des poids mutuellement partagés et fournissent une même transformation dans chaque couche et reçoivent en entrée :
- une sortie d'une couche précédente, ou pour une première couche de l'empilement de couches, une activation initiale, et
- une partie de l'entrée de l'empilement de couches ;
entraîner itérativement le réseau neuronal en utilisant les données d'entraînement, dans lequel une itération de l'entraînement comprend une partie de propagation avant et une partie de rétropropagation, dans lequel l'exécution de la partie de propagation avant comprend :
- déterminer un point d'équilibre de la fonction itérative, dans lequel le point d'équilibre est un point fixe vers lequel la fonction itérative converge, dans lequel la détermination du point d'équilibre comprend l'utilisation d'un algorithme numérique de recherche de racine pour trouver une solution racine pour la fonction itérative moins son entrée, et
- fournir le point d'équilibre en tant que substitut à une sortie de l'empilement de couches dans le réseau neuronal ;
dans lequel l'exécution de la partie de rétropropagation comprend :
- calculer des dérivées partielles respectives de la fonction itérative par rapport aux poids et à la partie de l'entrée ;
- calculer un gradient à une entrée de la couche d'exécution itérative pour les poids et/ou la partie de l'entrée en fonction d'une dérivée partielle respective et d'un gradient rétropropagé à la sortie de la couche d'exécution itérative ;
- une interface de sortie (180) pour fournir en sortie un réseau neuronal entraîné après l'entraînement.

14. Un système de commande (700) pour commander un système physique sur la base d'un état du système physique qui est inféré à partir de données de capteur, dans lequel le système physique est un véhicule autonome ou semi-autonome, un système robotique, ou un système de fabrication, le système de commande comprenant :
- une interface d'entrée (780) pour accéder à un réseau neuronal entraîné, dans lequel le réseau neuronal entraîné comprend un substitut à un empilement de couches dont les couches respectives ont des poids mutuellement partagés et fournissent une même transformation dans chaque couche et reçoivent en entrée :
- une sortie d'une couche précédente, ou pour une première couche de l'empilement de couches, une activation initiale, et
- une partie d'une entrée de l'empilement de couches ;
dans lequel l'empilement de couches forme une fonction itérative ;
dans lequel le substitut à l'empilement de couches comprend :
i) les poids mutuellement partagés, ii) un identifiant ou une représentation-de-données d'un algorithme numérique de recherche de racine, et iii) un ou plusieurs paramètres pour utiliser l'algorithme numérique de recherche de racine afin de déterminer un point d'équilibre de la fonction itérative, dans lequel le point d'équilibre est un point fixe vers lequel la fonction itérative converge ; ou
i) une représentation de données d'une couche de l'empilement de couches, et ii) des instructions lisibles par ordinateur définissant un contrôle de convergence pour déterminer quand une sortie obtenue par une exécution itérative de la couche atteint ou à un degré sélectionné approche le point d'équilibre ;
- une interface de données de capteur (720) pour accéder à des données d'entrée pour le réseau neuronal entraîné, dans lequel les données d'entrée comprennent des données de capteur obtenues à partir d'un ou plusieurs capteurs ;
- une interface d'actionneur (740) à un actionneur du système physique ;
- un sous-système de processeur (760) configuré pour :
appliquer le réseau neuronal entraîné aux données d'entrée pour obtenir des données de sortie représentant une inférence d'un état du système physique par le réseau neuronal entraîné, ladite application comprenant le fait de déterminer, dans une passe avant respective, le point d'équilibre en utilisant le substitut à l'empilement de couches et de fournir le point d'équilibre en tant que substitut à une sortie de l'empilement de couches dans le réseau neuronal ;
par l'intermédiaire de l'interface d'actionneur, commander l'actionneur sur la base de l'inférence de l'état du système physique.
